# EUROPEAN PATENT SPECIFICATION

(11) **EP 4 306 843 B1**
(45) Date of publication and mention of the grant of the patent: **16.09.2026**
(21) Application number: 22766939.7
(22) Date of filing: 02.03.2022
(51) Int. Cl.: F17C 3/04, F16L 41/08

(54) **TRIPLE-WALL TANK**
DREIWANDIGER TANK
RÉSERVOIR TRIPLE PAROI

(30) Priority: 08.03.2021 JP 2021036044
(43) Date of publication of application: 17.01.2024
(73) Proprietor: KAWASAKI JUKOGYO KABUSHIKI KAISHA, Kobe-shi, Hyogo 650-8670 (JP)
(72) Inventor: EGAMI, Takeshi, Kobe-shi, Hyogo 650-8670 (JP); HAYASHI, Shoichiro, Kobe-shi, Hyogo 650-8670 (JP); YAMAGUCHI, Takahiro, Kobe-shi, Hyogo 650-8670 (JP); KIKUGAWA, Shunsuke, Kobe-shi, Hyogo 650-8670 (JP)
(74) Representative: Arnold & Siedsma
(86) International application number: PCT/JP2022/008804
(87) International publication number: WO 2022/190980

(56) References cited:
- JP-A- 2006 161 737
- JP-A- 2015 004 382
- JP-A- S5 817 296
- KR-B1- 102 172 695
- US-A- 3 101 861
- US-A1- 2020 355 324

## Description

### Technical Field

The present disclosure relates to a triple containment tank that stores a low temperature liquefied gas, particularly to a support structure for a nozzle that penetrates a triple shell.

### Background Art

Double-shell tanks that store a low temperature liquefied gas have been known. Typically, the double-shell tank includes: a double shell including an inner tank and an outer tank; and an insulation filled in between the inner tank and the outer tank. The double-shell tank includes a pipe through which a low temperature liquid stored in the inner tank is discharged to an outside of the tank. Such pipe penetrates both of the inner tank and the outer tank.

According to the double-shell tank, when the low temperature liquefied gas is stored in the inner tank, the inner tank contracts by cold heat of the low temperature liquefied gas. Therefore, the inner tank and the outer tank are displaced relative to each other. Since each tank stores a liquid and/or a gas, airtightness between each tank and the pipe is required. However, when the pipe is directly coupled to both of the inner tank and the outer tank to secure the airtightness, excessive stress acts on the coupled portions by the relative displacement between the inner tank and the outer tank. Each of PTLs 1 and 2 proposes a support structure for a pipe in a double-shell tank.

According to a low temperature tank (double-shell tank) of PTL 1, a nozzle for liquid injection and discharge penetrates a roof of the inner tank and a roof of the outer tank. The nozzle is supported by the roof of the outer tank by being suspended from the roof of the outer tank and is hermetically coupled to the roof of the inner tank through a bellows.

According to a low temperature tank (double-shell tank) of PTL 2, a liquid delivering nozzle penetrates a roof of the inner tank and a roof of the outer tank, and an outer barrel of the nozzle is coupled to a portion of the roof of the inner tank which is lower in rigidity than the other portion of the roof of the inner tank. The roof of the outer tank and the outer barrel are coupled to each other through a bellows, and the outer barrel is mounted on a support base located at a bottom plate of the inner tank.

US 2020/355324 A1 discloses a triple containment tank according to the preamble of claims 1 and 11.

### Citation List

### Patent Literature

PTL 1: Japanese Laid-Open Patent Application Publication No. 58-17296
PTL 2: Japanese Laid-Open Utility Model Application Publication No. 58-14594

### Summary of Invention

### Technical Problem

Triple containment tanks in which an intermediate tank is further added between the inner tank and outer tank of the double-shell tank are also known. According to the triple containment tank, when a low temperature liquefied gas is stored in the inner tank, inter-tank distances of the inner tank, the intermediate tank, and the outer tank change by thermal contraction. Since the temperatures of the inner tank, the intermediate tank, and the outer tank are different from each other, the degrees of change of the inter-tank distances of the respective tanks are also different from each other. Each of PTLs 1 and 2 merely discloses a pipe support structure in the double-shell tank including the inner tank and the outer tank. Moreover, each of PTLs 1 and 2 does not disclose a relationship between the intermediate tank and the pipe. Therefore, the pipe support structure disclosed in each of PTLs 1 and 2 cannot be applied to the triple containment tank.

The present disclosure was made under these circumstances, and an object of the present disclosure is to propose, in a triple containment tank including a triple shell including an inner tank, an intermediate tank, and an outer tank, a support structure for a pipe penetrating the triple shell.

### Solution to Problem

A triple containment tank according to one aspect of the present disclosure includes:
an outer tank;
an intermediate tank located in the outer tank;
an inner tank located in the intermediate tank and storing a liquefied gas therein; and
a pipe penetrating the outer tank, the intermediate tank, and the inner tank, wherein
the pipe is coupled to the outer tank through a first expandable pipe, is coupled to one of the inner tank and the intermediate tank through a second expandable pipe, and is joined to or inserted into the other of the inner tank and the intermediate tank.

Moreover, a triple containment tank according to another aspect of the present disclosure includes:
an outer tank;
an intermediate tank located in the outer tank;
an inner tank which is located in the intermediate tank, includes an inner tank insertion hole, and stores a liquefied gas therein; and
a pipe penetrating the outer tank, the intermediate tank, and the inner tank, wherein:
   the pipe and the outer tank are coupled to each other through a first expandable pipe;
   the pipe and the intermediate tank are joined to each other;
   the pipe is loosely inserted into the inner tank insertion hole; and
   an inside of the inner tank and an inter-tank region between the inner tank and the intermediate tank communicate with each other through a gap between the inner tank insertion hole and the pipe.

According to the triple containment tank configured as above, when the low temperature liquefied gas is stored in the inner tank, and therefore, the inter-tank distances of the inner tank, the intermediate tank, and the outer tank change due to the thermal contraction of the tanks, the changes of the inter-tank distances are absorbed by the expansion and contraction of the expandable pipes, and this reduces the stress generated at joined portions where the respective tanks and the pipe are joined to each other. Therefore, the support structure for the pipe which is included in the triple containment tank configured as above is a structure suitable for supporting the pipe penetrating the triple shell of the triple containment tank including the triple shell including the inner tank, the intermediate tank, and the outer tank.

### Advantageous Effects of Invention

The present disclosure can propose, in a triple containment tank including a triple shell including an inner tank, an intermediate tank, and an outer tank, a support structure for a pipe penetrating the triple shell.

### Brief Description of Drawings

FIG. 1 is a sectional view showing an entire configuration of a triple containment tank according to an embodiment of the present disclosure.
FIG. 2 is a diagram for explaining a support structure for a pipe according to First Example.
FIG. 3 is a diagram for explaining the support structure for the pipe according to Modified Example 1 of First Example.
FIG. 4 is a diagram for explaining the support structure for the pipe according to Modified Example 2 of First Example.
FIG. 5 is a diagram for explaining the support structure for the pipe according to Modified Example 3 of First Example.
FIG. 6 is a diagram for explaining the support structure for the pipe according to Second Example.
FIG. 7 is a diagram for explaining the support structure for the pipe according to Third Example.
FIG. 8 is a diagram for explaining the support structure for the pipe according to Modified Example 1 of Third Example.
FIG. 9 is a diagram for explaining the support structure for the pipe according to Modified Example 2 of Third Example.

### Description of Embodiments

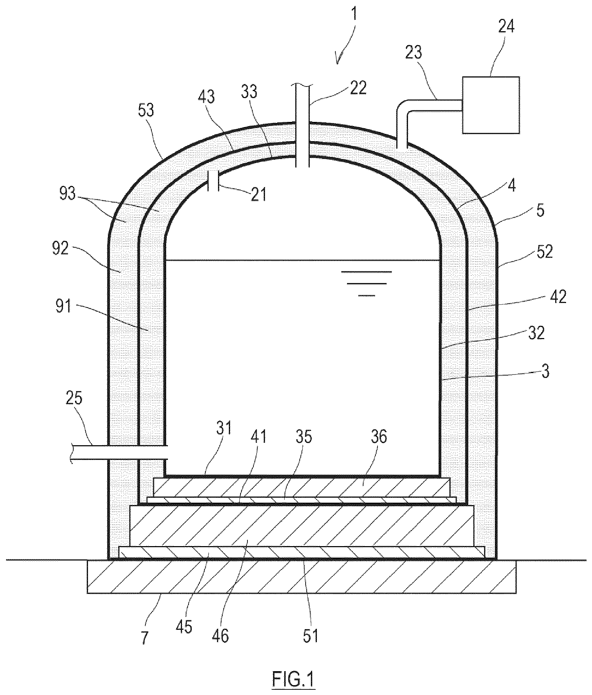

An embodiment of the present disclosure will be described with reference to the drawings. FIG. 1 is a sectional view showing an entire configuration of a triple containment tank 1 according to the embodiment of the present disclosure.

The triple containment tank 1 shown in FIG. 1 is a stationary flat-bottomed triple containment tank placed on the ground. The triple containment tank 1 includes: a tank foundation 7 made of concrete; an outer tank 5 located on the tank foundation 7; an intermediate tank 4 located inside the outer tank 5; and an inner tank 3 located inside the intermediate tank 4. The outer tank 5, the intermediate tank 4, and the inner tank 3 form a triple shell.

The inner tank 3 is a container that stores a low temperature liquefied gas. Examples of the low temperature liquefied gas include liquid helium, liquid hydrogen, liquid nitrogen, LNG, and LPG. The inner tank 3 includes: a substantially flat inner tank bottom plate 31; a cylindrical inner tank side plate 32 standing from the inner tank bottom plate 31; and an inner tank roof 33 located at an upper portion of the inner tank side plate 32. The inner tank side plate 32 and the tank foundation 7 may be coupled to each other by, for example, mooring members, such as anchor straps, located around the inner tank 3 at substantially regular intervals.

The intermediate tank 4 surrounds the inner tank 3. The intermediate tank 4 includes: a substantially flat intermediate tank bottom plate 41; a cylindrical intermediate tank side plate 42 standing from the intermediate tank bottom plate 41; and an intermediate tank roof 43 located at an upper portion of the intermediate tank side plate 42. A level concrete layer 35 and an inner bottom insulation layer 36 are located between the intermediate tank bottom plate 41 and the inner tank bottom plate 31 in an upper-lower direction. The intermediate tank roof 43 may support the inner tank roof 33. To be specific, the inner tank roof 33 may be a suspended roof. The intermediate tank side plate 42 and the tank foundation 7 may be coupled to each other by, for example, mooring members, such as anchor straps, located around the intermediate tank 4 at substantially regular intervals.

The outer tank 5 surrounds the intermediate tank 4. The outer tank 5 includes: a substantially flat outer tank bottom plate 51 located on the tank foundation 7; a cylindrical outer tank side plate 52 standing from the outer tank bottom plate 51; and an outer tank roof 53 located at an upper portion of the outer tank side plate 52. A level concrete layer 45 and an outer bottom insulation layer 46 are located between the outer tank bottom plate 51 and the intermediate tank bottom plate 41 in the upper-lower direction. The outer tank side plate 52 may be coupled to the tank foundation 7 by, for example, coupling members, such as anchor bolts. Or, the outer tank bottom plate 51 may be coupled to the tank foundation 7 by, for example, coupling members, such as anchor plates driven in the tank foundation 7.

There is a gap between an outer wall of the inner tank 3 and an inner wall of the intermediate tank 4, i.e., a first inter-tank region 91 is located therebetween. There is a gap between an outer wall of the intermediate tank 4 and an inner wall of the outer tank 5, i.e., a second inter-tank region 92 is located therebetween. The first inter-tank region 91 and the second inter-tank region 92 are filled with an insulation 93. For example, the insulation 93 may be perlite, glass wool, or the like which has been used as an insulation of a double-shell tank.

A BOG pipe 22 is open at the inner tank roof 33. A vaporized gas generated in the inner tank 3 is sent through the BOG pipe 22 to an outside of the triple containment tank 1. A delivering pipe 25 is open at a lower portion of the inner tank 3. The liquefied gas in the inner tank 3 is sent through the delivering pipe 25 to the outside. However, the delivering pipe 25 may extend upward in the inner tank 3 and send the liquefied gas to the outside through an upper portion of the triple containment tank 1. A communication pipe 21 through which an upper portion in the inner tank 3 and the first inter-tank region 91 communicate with each other is located at the inner tank roof 33 of the inner tank 3. The vaporized gas of the liquefied gas which is generated in the inner tank 3 flows into the first inter-tank region 91 through the communication pipe 21. Thus, the first inter-tank region 91 is filled with the vaporized gas of the liquefied gas. However, a gas having a low boiling point equal to that of the vaporized gas of the liquefied gas may be introduced into the first inter-tank region 91 from the outside of the triple containment tank 1. Or, the vaporized gas of the liquefied gas may be introduced into the first inter-tank region 91 by connecting a branch pipe of the BOG pipe 22 and the first inter-tank region 91.

The first inter-tank region 91 and the second inter-tank region 92 as spaces are separated from each other by airtightness of the intermediate tank 4 that separates the first inter-tank region 91 and the second inter-tank region 92. The second inter-tank region 92 is supplied with an inert gas from an inert gas supply source 24 through an introduction pipe 23 and filled with the inert gas. This inert gas is a gas having a higher boiling point than the liquefied gas stored in the inner tank 3. One example of such inert gas is nitrogen.

### Pipe Support Structure

In the triple containment tank 1 configured as above, each of the BOG pipe 22 and the delivering pipe 25 is a pipe which penetrates the triple shell including the inner tank 3, the intermediate tank 4, and the outer tank 5 and through which the inside and outside of the inner tank 3 communicate with each other. The following will describe support structures S1-S3 according to First to Third Examples for a pipe P, such as the BOG pipe 22 or the delivering pipe 25, which penetrates the triple shell. The support structures S1-S3 for the pipe P are applicable to not only the BOG pipe 22 and the delivering pipe 25 but also any pipe that penetrates the triple shell. The pipe P described below is a vacuum double pipe including a main pipe and an exterior pipe. However, the pipe P to which the support structures S1-S3 are applied is not limited to the vacuum double pipe.

### Support Structure S1 for Pipe P according to First Example

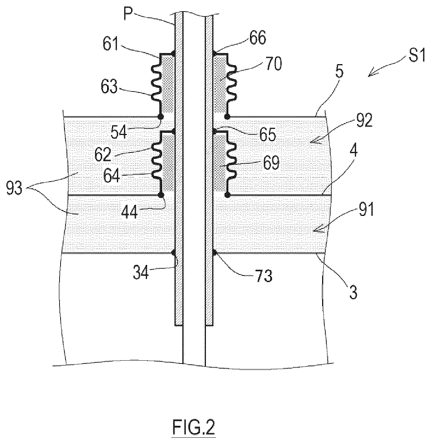

FIG. 2 is a diagram for explaining the support structure S1 for the pipe P according to First Example. FIG. 2 is an enlarged view of portions where the pipe P penetrates the inner tank 3, the intermediate tank 4, and the outer tank 5.

According to the support structure S1 for the pipe P in FIG. 2, the pipe P is joined to the inner tank 3, is coupled to the intermediate tank 4 through a second expandable pipe 62, and is coupled to the outer tank 5 through a first expandable pipe 61. The pipe P may be inserted into the inner tank 3 without being joined to the inner tank 3. In the present description, the term "joined" denotes that the pipe P and the tank (the inner tank 3, the intermediate tank 4, or the outer tank 5) are mechanically or metallurgically coupled to each other without an expandable pipe located therebetween. Moreover, in the present description, the term "coupled" denotes that the pipe P and the tank (the inner tank 3, the intermediate tank 4, or the outer tank 5) are connected to each other, and the expression "coupled to each other through an expandable pipe" denotes that the pipe P and the tank are connected to each other by the expandable pipe located therebetween.

The inner tank 3 includes an inner tank insertion hole 34 for the pipe P, and the pipe P is inserted into the inner tank insertion hole 34. An opening edge of the inner tank insertion hole 34 and the pipe P are welded to each other to secure airtightness. More specifically, the opening edge of the inner tank insertion hole 34 and the exterior pipe of the pipe P are welded to each other to secure the airtightness. This welded portion can be substantially regarded as a joined portion 73 where the inner tank 3 and the pipe P are joined to each other.

The intermediate tank 4 includes an intermediate tank insertion hole 44 for the pipe P, and the pipe P is inserted into the intermediate tank insertion hole 44. The second expandable pipe 62 is joined to an opening edge of the intermediate tank insertion hole 44. The second expandable pipe 62 is a tubular member projecting outward (i.e., toward the outer tank 5) from the intermediate tank 4, and the pipe P is inserted into the second expandable pipe 62. A fibrous insulation 69, such as glass wool, is filled in between an outer peripheral surface of the pipe P and an inner peripheral surface of the second expandable pipe 62.

A base portion of the second expandable pipe 62 is joined to the intermediate tank 4, and a tip portion of the second expandable pipe 62 is joined to the pipe P. A joined portion where the second expandable pipe 62 and the intermediate tank 4 are joined to each other and a joined portion where the second expandable pipe 62 and the pipe P are joined to each other may be welded to secure the airtightness. The joined portion where the tip portion of the second expandable pipe 62 and the pipe P are joined to each other can be substantially regarded as a joined portion 65 where the intermediate tank 4 and the pipe P are joined to each other.

At least part of the second expandable pipe 62 includes an expandable portion 64. The expandable portion 64 may be realized by, for example, a corrugation or a bellows which is located at a middle portion of the second expandable pipe 62. By the expandable portion 64, the tip portion of the second expandable pipe 62 is allowed to be displaced relative to the base portion of the second expandable pipe 62 in both of a radial direction and axial direction of the second expandable pipe 62. In other words, the joined portion 65 is allowed to be displaced relative to a main body of the intermediate tank 4.

The outer tank 5 includes an outer tank insertion hole 54 for the pipe P, and the pipe P is inserted into the outer tank insertion hole 54. The first expandable pipe 61 is joined to an opening edge of the outer tank insertion hole 54. The first expandable pipe 61 is a tubular member projecting outward from the outer tank 5, and the pipe P is inserted into the first expandable pipe 61. A fibrous insulation 70, such as glass wool, is filled in between the outer peripheral surface of the pipe P and an inner peripheral surface of the first expandable pipe 61.

A base portion of the first expandable pipe 61 is joined to the outer tank 5, and a tip portion of the first expandable pipe 61 is joined to the pipe P. A joined portion where the first expandable pipe 61 and the outer tank 5 are joined to each other and a joined portion where the first expandable pipe 61 and the pipe P are joined to each other may be welded to secure the airtightness. The joined portion where the tip portion of the first expandable pipe 61 and the pipe P are joined to each other can be substantially regarded as a joined portion 66 where the outer tank 5 and the pipe P are joined to each other.

At least part of the first expandable pipe 61 includes an expandable portion 63. The expandable portion 63 may be realized by, for example, a corrugation or a bellows which is located at a middle portion of the first expandable pipe 61. By the expandable portion 63, the tip portion of the first expandable pipe 61 is allowed to be displaced relative to the base portion of the first expandable pipe 61 in both of a radial direction and axial direction of the first expandable pipe 61. In other words, the joined portion 66 is allowed to be displaced relative to a main body of the outer tank 5.

According to the triple containment tank 1 including the support structure S1, when the low temperature liquefied gas is stored in the inner tank 3, an inter-tank distance of the first inter-tank region 91 (i.e., an interval between the inner tank 3 and the intermediate tank 4) and an inter-tank distance of the second inter-tank region 92 (i.e., an interval between the intermediate tank 4 and the outer tank 5) change from those when the inner tank 3 is empty. Even when the inter-tank distance of the first inter-tank region 91 and the inter-tank distance of the second inter-tank region 92 change as above, such changes are absorbed by the expansion and contraction of the expandable pipes 61 and 62, and this reduces stress generated at the joined portion 73 where the inner tank 3 and the pipe P are joined to each other, the joined portion 65 where the intermediate tank 4 and the pipe P are joined to each other, and the joined portion 66 where the outer tank 5 and the pipe P are joined to each other.

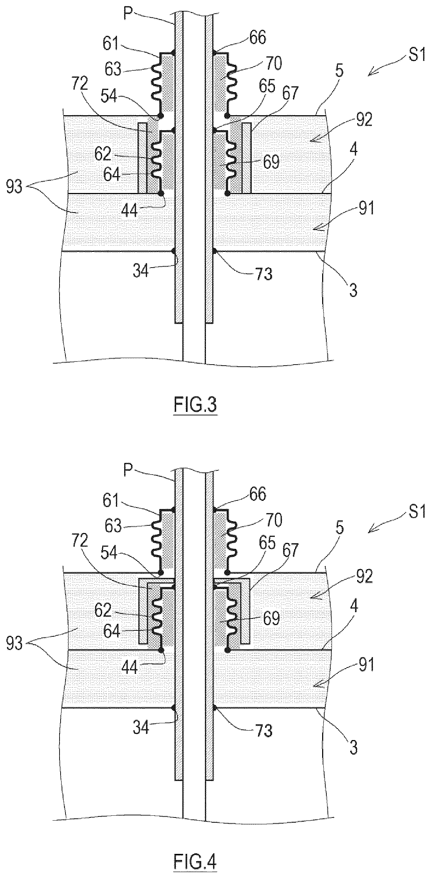

As shown in FIG. 3, when a powdered insulation as the insulation 93 is filled in between the inner tank 3 and the intermediate tank 4, a powder leakage prevention dike 67 may be located around the second expandable pipe 62 located at the intermediate tank 4 in the support structure S1 for the pipe P according to First Example. The powder leakage prevention dike 67 is located in the second inter-tank region 92 and prevents the powdered insulation from flowing into a region around the second expandable pipe 62.

In the example shown in FIG. 3, the powder leakage prevention dike 67 is a cylindrical member surrounding the second expandable pipe 62. The powder leakage prevention dike 67 is made of, for example, polyurethane foam. One end portion of the powder leakage prevention dike 67 is joined to a surface of the intermediate tank 4 by adhesion. A region between the powder leakage prevention dike 67 and the second expandable pipe 62 may be a space, but it is desirable that a fibrous insulation 72, such as glass wool, be filled in the region.

The powder leakage prevention dike 67 is not limited to the configuration shown in FIG. 3 as long as the powder leakage prevention dike 67 can prevent the powdered insulation from entering into the region around the second expandable pipe 62. For example, the powder leakage prevention dike 67 may be a tubular member surrounding the second expandable pipe 62 and including both end portions which are not joined to the pipe P and the intermediate tank 4. Moreover, for example, as shown in FIG. 4, the powder leakage prevention dike 67 may be a tubular member surrounding the second expandable pipe 62 and may be joined to the pipe P. Also in this case, the region between the powder leakage prevention dike 67 and the second expandable pipe 62 may be a space, but it is desirable that the fibrous insulation 72, such as glass wool, be filled in the region.

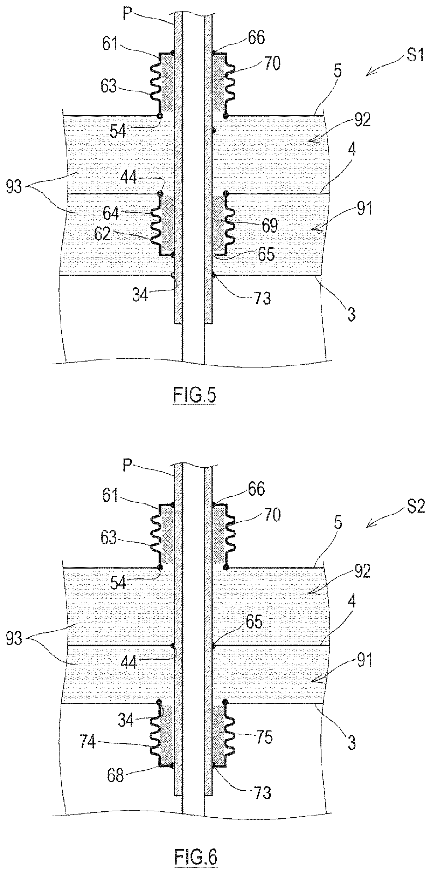

In the support structure S1 for the pipe P according to First Example, the second expandable pipe 62 projects outward from the intermediate tank 4. However, the second expandable pipe 62 may project inward from the intermediate tank 4. In this case, as shown in FIG. 5, the second expandable pipe 62 is a tubular member that exists in the first inter-tank region 91 and surrounds the pipe P. The base portion of the second expandable pipe 62 is joined to the intermediate tank 4, and the tip portion of the second expandable pipe 62 is joined to the pipe P. Even when the second expandable pipe 62 projects inward from the intermediate tank 4 as above, it is desirable that as with the above, the powder leakage prevention dike 67 be located around the second expandable pipe 62 in order that the powdered insulation filled in the first inter-tank region 91 is prevented from flowing into the region around the second expandable pipe 62.

### Support Structure S2 for Pipe P according to Second Example

FIG. 6 is a diagram for explaining the support structure S2 for the pipe P according to Second Example. FIG. 6 is an enlarged view of portions where the pipe P penetrates the inner tank 3, the intermediate tank 4, and the outer tank 5.

According to the support structure S2 for the pipe P in FIG. 6, the pipe P is joined to the intermediate tank 4, is coupled to the inner tank 3 through a second expandable pipe 68, and is coupled to the outer tank 5 through the first expandable pipe 61. Since a coupling structure in which the outer tank 5 and the pipe P are coupled to each other through the first expandable pipe 61 is substantially the same as that in the support structure S1 for the pipe P according to First Example, a detailed explanation thereof is omitted.

The intermediate tank 4 includes the intermediate tank insertion hole 44 for the pipe P, and the pipe P is inserted into the intermediate tank insertion hole 44. The opening edge of the intermediate tank insertion hole 44 and the pipe P are welded to each other to secure the airtightness. More specifically, the opening edge of the intermediate tank insertion hole 44 and the exterior pipe of the pipe P are welded to each other to secure the airtightness. This welded portion can be substantially regarded as the joined portion 65 where the intermediate tank 4 and the pipe P are joined to each other. However, when the intermediate tank 4 does not require the airtightness, the pipe P is inserted into the intermediate tank insertion hole 44, but the pipe P and the intermediate tank insertion hole 44 do not have to be joined to each other.

The inner tank 3 includes the inner tank insertion hole 34 for the pipe P, and the pipe P is inserted into the inner tank insertion hole 34. The second expandable pipe 68 is joined to the opening edge of the inner tank insertion hole 34. The second expandable pipe 68 is a tubular member projecting inward (i.e., toward the inside of the tank) from the inner tank 3, and the pipe P is inserted into the second expandable pipe 68. A fibrous insulation 75, such as glass wool, is filled in between the outer peripheral surface of the pipe P and an inner peripheral surface of the second expandable pipe 68.

A base portion of the second expandable pipe 68 is joined to the inner tank 3, and a tip portion of the second expandable pipe 68 is joined to the pipe P. A joined portion where the second expandable pipe 68 and the inner tank 3 are joined to each other and a joined portion where the expandable pipe 68 and the pipe P are joined to each other may be welded to secure the airtightness. The joined portion where the tip portion of the expandable pipe 68 and the pipe P are joined to each other can be substantially regarded as the joined portion 73 where the inner tank 3 and the pipe P are joined to each other.

At least part of the second expandable pipe 68 includes an expandable portion 74. The expandable portion 74 may be realized by, for example, a corrugation or a bellows which is located at a middle portion of the second expandable pipe 68. By the expandable portion 74, the tip portion of the second expandable pipe 68 is allowed to be displaced relative to the base portion of the second expandable pipe 68 in both of a radial direction and axial direction of the second expandable pipe 68. In other words, the joined portion 73 is allowed to be displaced relative to a main body of the inner tank 3.

According to the triple containment tank 1 including the support structure S2, when the low temperature liquefied gas is stored in the inner tank 3, the inter-tank distance of the first inter-tank region 91 and the inter-tank distance of the second inter-tank region 92 change from those when the inner tank 3 is empty. Even when the inter-tank distance of the first inter-tank region 91 and the inter-tank distance of the second inter-tank region 92 change as above, such changes are absorbed by the expansion and contraction of the expandable pipes 68 and 62, and this reduces stress generated at the joined portion 73 where the inner tank 3 and the pipe P are joined to each other, the joined portion 65 where the intermediate tank 4 and the pipe P are joined to each other, and the joined portion 66 where the outer tank 5 and the pipe P are joined to each other.

In the support structure S2 for the pipe P according to Second Example, the second expandable pipe 68 projects inward from the inner tank 3. Therefore, even when the first inter-tank region 91 is narrow, the second expandable pipe 68 can be located at the inner tank 3. However, the expandable pipe 68 may project outward from the inner tank 3 and may be located in the first inter-tank region 91.

### Support Structure S3 for Pipe P according to Third Example

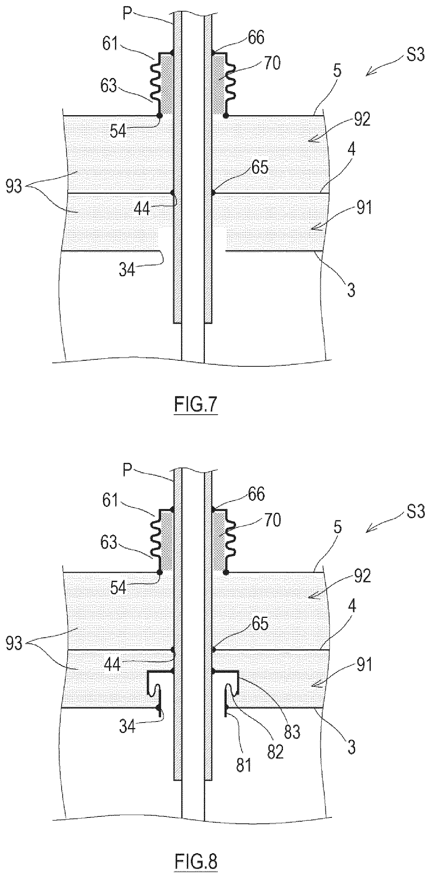

FIG. 7 is a diagram for explaining the support structure S3 for the pipe P according to Third Example. FIG. 7 is an enlarged view of portions where the pipe P penetrates the inner tank 3, the intermediate tank 4, and the outer tank 5. The support structure S3 for the pipe P according to Third Example is especially applied to a pipe (such as the BOG pipe 22) that penetrates a roof of the triple containment tank 1.

According to the support structure S3 for the pipe P in FIG. 7, the pipe P is joined to the intermediate tank 4, is coupled to the outer tank 5 through the first expandable pipe 61, and is not joined to the inner tank 3. Since the coupling structure in which the outer tank 5 and the pipe P are coupled to each other through the first expandable pipe 61 is substantially the same as that in the support structure S1 for the pipe P according to First Example, a detailed explanation thereof is omitted. Moreover, since a joined structure in which the intermediate tank 4 and the pipe P are joined to each other is substantially the same as that in the support structure S2 for the pipe P according to Second Example, a detailed explanation thereof is omitted.

The inner tank 3 includes the inner tank insertion hole 34 for the pipe P, and the pipe P is loosely inserted into the inner tank insertion hole 34. The inside of the inner tank 3 and the first inter-tank region 91 between the inner tank 3 and the intermediate tank 4 communicate with each other through a gap between the opening edge of the inner tank insertion hole 34 and the pipe P. A boil off gas in the inner tank 3 flows into the first inter-tank region 91. Therefore, when the support structure S3 for the pipe P is adopted, the communication pipe 21 may be omitted.

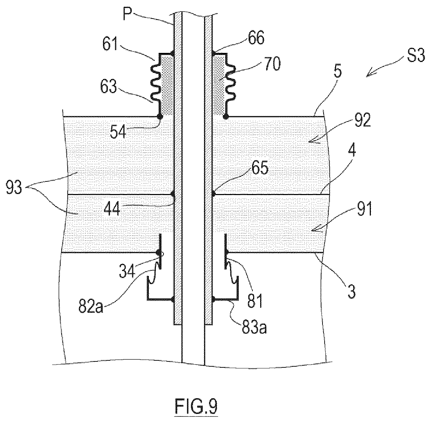

To prevent the insulation 93 from entering into the inside of the inner tank 3 through the inner tank insertion hole 34, it is desirable that the insulation 93, such as a fibrous insulation, a panel insulation, or a block insulation, which does not have flowability, be located around the inner tank insertion hole 34. However, the inside of the inner tank 3 and the first inter-tank region 91 may be physically isolated from each other such that the insulation 93, dust, and the like are prevented from getting into the inside of the inner tank 3 through the gap between the inner tank insertion hole 34 and the pipe P. For example, as shown in FIG. 8, a tubular body 81 is inserted into the inner tank insertion hole 34 so as to be substantially concentric with the pipe P, and an outer wall of the tubular body 81 and an edge of the inner tank insertion hole 34 are fixed to each other. The tubular body 81 projects from a wall of the inner tank 3 to both of the inside of the first inter-tank region 91 and the inside of the inner tank 3. In the first inter-tank region 91, a flange-shaped cover plate 83 projecting from the outer wall of the pipe P in the radial direction is fixed to the pipe P. The cover plate 83 covers a gap between an end portion of the tubular body 81 and the pipe P and is located away from the tubular body 81 so as not to interfere with the tubular body 81. An outer edge of the cover plate 83 and an upper end of the tubular body 81 are connected to each other by a filter 82. A gap between the cover plate 83 and the tubular body 81 is closed by the filter 82 such that gas is allowed to flow through the gap. When the inner tank 3 contracts, an interval between the tubular body 81 fixed to the inner tank 3 and the cover plate 83 increases. However, since the filter 82 is made of a material that can expand, contract, and be deformed, or the filter 82 has an expansion/contraction margin, the filter 82 is deformed so as to follow a change in size of the gap. It is desirable that the filter 82 be made of a material, such as glass cloth, which is thermally and chemically stable. In the example shown in FIG. 8, the cover plate 83 and the filter 82 are located in the first inter-tank region 91. However, as shown in FIG. 9, the cover plate 83 and the filter 82 may be located in the inner tank 3. In this case, in the inner tank 3, the cover plate 83 projecting from the outer wall of the pipe P in the radial direction is fixed to the pipe P, and the outer edge of the cover plate 83 and a lower end of the tubular body 81 are connected to each other by the filter 82.

According to the triple containment tank 1 including the support structure S3, when the low temperature liquefied gas is stored in the inner tank 3, the inter-tank distance of the first inter-tank region 91 and the inter-tank distance of the second inter-tank region 92 change from those when the inner tank 3 is empty. Even when the inter-tank distance of the second inter-tank region 92 changes as above, such change is absorbed by the expansion and contraction of the first expandable pipe 61, and this reduces stress generated at the joined portion 65 where the intermediate tank 4 and the pipe P are joined to each other and the joined portion 66 where the outer tank 5 and the pipe P are joined to each other. Moreover, the pipe P is not joined to the inner tank 3. Therefore, even when the inter-tank distance of the first inter-tank region 91 changes, the stress generated at the joined portion 65 where the intermediate tank 4 and the pipe P are joined to each other and the stress generated at the joined portion 66 where the outer tank 5 and the pipe P are joined to each other are reduced. In addition, the communication pipe 21 can be omitted.

### Summary

As described above, the triple containment tank 1 according to the present embodiment including the support structure S1 or S2 for the pipe P according to First or Second Example includes:
the outer tank 5;
the intermediate tank 4 located in the outer tank 5;
the inner tank 3 located in the intermediate tank 4 and storing the liquefied gas therein; and
the pipe P penetrating the outer tank 5, the intermediate tank 4, and the inner tank 3, wherein
the pipe P and the outer tank 5 are coupled to each other through the first expandable pipe 61, the pipe P and one of the inner tank 3 and the intermediate tank 4 are coupled to each other through the second expandable pipe 62 or 68, and the pipe P and the other of the inner tank 3 and the intermediate tank 4 are joined to each other (or the pipe P is inserted into the other of the inner tank 3 and the intermediate tank 4).

According to the triple containment tank 1 configured as above, when the low temperature liquefied gas is stored in the inner tank 3, and therefore, the inter-tank distances of the inner tank 3, the intermediate tank 4, and the outer tank 5 change due to the thermal contraction of the tanks, the changes of the inter-tank distances are absorbed by the expansion and contraction of the expandable pipes 61, 62, and 68, and this reduces the stress generated at the joined portions 73, 65, and 66 where the respective tanks and the pipe P are joined to each other. Therefore, the support structures S1 and S2 for the pipe P each of which is included in the triple containment tank 1 configured as above is suitable for supporting the pipe P penetrating the triple shell of the triple containment tank 1 including the triple shell including the inner tank 3, the intermediate tank 4, and the outer tank 5.

In the triple containment tank 1 including the support structure S1 for the pipe P according to First Example, the intermediate tank 4 includes the intermediate tank insertion hole 44 into which the pipe P is inserted, the base portion of the second expandable pipe 62 is joined to the intermediate tank 4 so as to project outward from the edge of the intermediate tank insertion hole 44, and the tip portion of the second expandable pipe 62 is joined to the pipe P. According to the triple containment tank 1 including the support structure S1 for the pipe P, the second expandable pipe 62 is located in the second inter-tank region 92. Therefore, as compared to a case where the second expandable pipe 62 is located in the inner tank 3 or in the first inter-tank region 91, construction is easy, and the degree of cold heat resistance of the second expandable pipe 62 may be low.

In the triple containment tank 1 including the support structure S1 for the pipe P according to First Example, the powdered insulation may be filled in the second inter-tank region 92 between the intermediate tank 4 and the outer tank 5, and the powder leakage prevention dike 67 that prevents the powdered insulation from moving to the region around the second expandable pipe 62 may be located around the second expandable pipe 62. Herein, the fibrous insulation 72 may be filled in a gap between the powder leakage prevention dike 67 and the pipe P in the radial direction of the pipe P. Moreover, the powder leakage prevention dike 67 may be a tubular member surrounding the second expandable pipe 62, a first end portion of the tubular member and the intermediate tank 4 may be joined to each other, and a second end portion of the tubular member and the pipe P may be joined to each other.

Moreover, in the triple containment tank 1 including the support structure S1 for the pipe P according to First Example, the intermediate tank 4 includes the intermediate tank insertion hole 44 into which the pipe P is inserted. The base portion of the second expandable pipe 62 is joined to the intermediate tank 4 so as to project inward from the edge of the intermediate tank insertion hole 44, and the tip portion of the second expandable pipe 62 is joined to the pipe P. According to the triple containment tank 1 including the support structure S1 for the pipe P, the powdered insulation is filled in the first inter-tank region 91 between the inner tank 3 and the intermediate tank 4, and the powder leakage prevention dike 67 that prevents the powdered insulation from moving to the region around the second expandable pipe 62 is located around the second expandable pipe 62. Herein, the fibrous insulation 72 may be filled in the gap between the powder leakage prevention dike 67 and the pipe P in the radial direction of the pipe P. Moreover, the powder leakage prevention dike 67 may be a tubular member surrounding the second expandable pipe 62, the first end portion of the tubular member and the intermediate tank 4 may be joined to each other, and the second end portion of the tubular member and the pipe P may be joined to each other.

When the powder leakage prevention dike 67 is located around the second expandable pipe 62 as above, the powdered insulation is prevented from being clogged in the expandable portion 64 of the second expandable pipe 62, and the powdered insulation is prevented from being welded with pressure to the expandable portion 64 of the second expandable pipe 62. Therefore, the expansion, contraction, and shear deformation of the second expandable pipe 62 are not inhibited.

Moreover, in the triple containment tank 1 including the support structure S2 for the pipe P according to Second Example, the inner tank 3 includes the inner tank insertion hole 34 into which the pipe P is inserted. The base portion of the second expandable pipe 68 is joined to the inner tank 3 so as to project inward from the edge of the inner tank insertion hole 34, and the tip portion of the second expandable pipe 68 is joined to the pipe P. In the triple containment tank 1 including the support structure S2 for the pipe P according to Second Example, since the second expandable pipe 68 projects to the inside of the inner tank 3, there are few constraints regarding an installation space for the second expandable pipe 68, and the degrees of freedom of the design and the construction are high.

Moreover, the triple containment tank 1 according to the present embodiment including the support structure S3 for the pipe P according to Third Example includes:
the outer tank 5;
the intermediate tank 4 located in the outer tank 5;
the inner tank 3 which is located in the intermediate tank 4, includes the inner tank insertion hole 34, and stores the liquefied gas therein; and
the pipe P penetrating the outer tank 5, the intermediate tank 4, and the inner tank 3, wherein:
   the pipe P and the outer tank 5 are coupled to each other through the first expandable pipe 61;
   the pipe P and the intermediate tank 4 are joined to each other;
   the pipe P is loosely inserted into the inner tank insertion hole 34; and
   the inside of the inner tank 3 and the first inter-tank region 91 between the inner tank 3 and the intermediate tank 4 communicate with each other through the gap between the inner tank insertion hole 34 and the pipe P.

According to the triple containment tank 1 configured as above, when the low temperature liquefied gas is stored in the inner tank 3, and therefore, the inter-tank distances of the inner tank 3, the intermediate tank 4, and the outer tank 5 change due to the thermal contraction, the changes of the inter-tank distances are absorbed by the expansion and contraction of the first expandable pipe 61, and this reduces the stress generated at the joined portion 65 where the intermediate tank 4 and the pipe P are joined to each other and the joined portion 66 where the outer tank 5 and the pipe P are joined to each other. Therefore, the support structure S3 for the pipe P which is included in the triple containment tank 1 configured as above is suitable for supporting the pipe P penetrating the triple shell of the triple containment tank 1 including the triple shell including the inner tank 3, the intermediate tank 4, and the outer tank 5. In addition, since the inside of the inner tank 3 and the first inter-tank region 91 communicate with each other through the inner tank insertion hole 34 into which the pipe P is loosely inserted, the communication pipe 21 can be omitted.

The triple containment tank 1 including the support structure S3 for the pipe P according to Third Example may further include: the tubular body 81 which is fixed to the edge of the inner tank insertion hole 34 and into which the pipe P is loosely inserted; the flange-shaped cover plate 83 located away from the tubular body 81 in the first inter-tank region 91 or the inner tank 3 and projecting from the outer wall of the pipe P in the radial direction; and the expandable filter 82 which closes the gap between the tubular body 81 and the cover plate 83 such that gas is allowed to flow through the gap.

According to the triple containment tank 1 configured as above, gas is allowed to pass through between the inner tank insertion hole 34 and the pipe P, and solids, such as a cold insulation and powder dust, are prevented from passing through between the inner tank insertion hole 34 and the pipe P. Since the gas in the inner tank 3 can move to the first inter-tank region 91 through the inner tank insertion hole 34, the communication pipe 21 can be omitted. Moreover, the flow of the gas from the inner tank 3 through the inner tank insertion hole 34 to the first inter-tank region 91 can be prevented from directly colliding with the intermediate tank 4.

The foregoing has described a preferred embodiment of the present disclosure. Modifications of specific structures and/or functional details of the above embodiment may be included in the present disclosure as long as they are within the scope of the present disclosure. The above configuration may be changed as below, for example.

For example, in the above embodiment, the inner tank 3, the intermediate tank 4, and the outer tank 5 are cylindrical flat-bottomed tanks, but the shapes of these tanks are not limited to cylindrical shapes. The inner tank 3, the intermediate tank 4, and the outer tank 5 may be substantially polygonal tubular flat-bottomed tanks.

For example, in the above embodiment, the communication pipe 21 may be omitted. In other words, each of the inner tank 3, the intermediate tank 4, and the outer tank 5 may have airtightness.

For example, in the above embodiment, the triple containment tank 1 is located on land. However, the support structures S1-S3 for the pipe P in the triple containment tank 1 may be applied to triple containment tanks mounted on ships.

### Reference Signs List

- 1: triple containment tank
- 3: inner tank
- 4: intermediate tank
- 5: outer tank
- 22: BOG pipe
- 25: delivering pipe
- 34: inner tank insertion hole
- 44: intermediate tank insertion hole
- 54: outer tank insertion hole
- 61: first expandable pipe
- 62: second expandable pipe
- 67: powder leakage prevention dike
- 68: second expandable pipe
- 69, 70, 72, 75: fibrous insulation
- 65, 66, 73: joined portion
- 91, 92: inter-tank region
- 93: insulation
- P: pipe
- S1-S3: support structure

## Claims

1. A triple containment tank (1) comprising:
an outer tank (5);
an intermediate tank (4) located in the outer tank (5);
an inner tank (3) located in the intermediate tank (4) and storing a liquefied gas therein; and
a pipe (P) penetrating the outer tank (5), the intermediate tank (4), and the inner tank (3), wherein
the pipe (P) is coupled to the outer tank (5) through a first expandable pipe (61), **characterized in that** the pipe (P) is coupled to one of the inner tank (3) and the intermediate tank (4) through a second expandable pipe (62 or 68), and is joined to the other of the inner tank (3) and the intermediate tank (4).

2. The triple containment tank (1) according to claim 1, wherein:
the intermediate tank (4) includes an insertion hole (44) into which the pipe (P) is inserted;
a base portion of the second expandable pipe (62) is joined to the intermediate tank (4) so as to project outward from an edge of the insertion hole (44); and
a tip portion of the second expandable pipe (62) is joined to the pipe (P).

3. The triple containment tank (1) according to claim 2, wherein:
a powdered insulation is filled in an inter-tank region (92) between the intermediate tank (4) and the outer tank (5); and
a powder leakage prevention dike (67) that prevents the powdered insulation from moving to a region around the second expandable pipe (62) is located around the second expandable pipe (62).

4. The triple containment tank (1) according to claim 3, wherein
a fibrous insulation (72) is filled in a gap between the powder leakage prevention dike (67) and the pipe (P) in a radial direction of the pipe (P).

5. The triple containment tank (1) according to claim 3 or 4, wherein:
the powder leakage prevention dike (67) is a tubular member surrounding the second expandable pipe (62); and
a first end portion of the tubular member and the intermediate tank (4) are joined to each other, or a second end portion of the tubular member and the pipe (P) are joined to each other.

6. The triple containment tank (1) according to claim 1, wherein:
the intermediate tank (4) includes an insertion hole (44) into which the pipe (P) is inserted;
a base portion of the second expandable pipe (62) is joined to the intermediate tank (4) so as to project inward from an edge of the insertion hole (44); and
a tip portion of the second expandable pipe (62) is joined to the pipe (P).

7. The triple containment tank (1) according to claim 6, wherein:
a powdered insulation is filled in an inter-tank region (91) between the inner tank (3) and the intermediate tank (4); and
a powder leakage prevention dike (67) that prevents the powdered insulation from moving to a region around the second expandable pipe (62) is located around the second expandable pipe (62).

8. The triple containment tank (1) according to claim 7, wherein a fibrous insulation (72) is filled in a gap between the powder leakage prevention dike (67) and the pipe (P) in a radial direction of the pipe (P).

9. The triple containment tank (1) according to claim 7 or 8, wherein:
the powder leakage prevention dike (67) is a tubular member surrounding the second expandable pipe (62); and
a first end portion of the tubular member and the intermediate tank (4) are joined to each other, or a second end portion of the tubular member and the pipe (P) are joined to each other.

10. The triple containment tank (1) according to claim 1, wherein:
the inner tank (3) includes an insertion hole (34) into which the pipe (P) is inserted;
a base portion of the second expandable pipe (68) is joined to the inner tank (3) so as to project inward from an edge of the insertion hole (34); and
a tip portion of the second expandable pipe (68) is joined to the pipe (P).

11. A triple containment tank (1) comprising:
an outer tank (5);
an intermediate tank (4) located in the outer tank (5);
an inner tank (3) which is located in the intermediate tank (4), includes an inner tank insertion hole (34), and stores a liquefied gas therein; and
a pipe (P) penetrating the outer tank (5), the intermediate tank (4), and the inner tank (3), wherein:
the pipe (P) and the outer tank (5) are coupled to each other through a first expandable pipe (61); and
the pipe (P) and the intermediate tank (4) are joined to each other;
**characterized in that**:
the pipe (P) is loosely inserted into the inner tank insertion hole (34); and
an inside of the inner tank (3) and an inter-tank region (91) between the inner tank (3) and the intermediate tank (4) communicate with each other through a gap between the inner tank insertion hole (34) and the pipe (P).

12. The triple containment tank (1) according to claim 11, further comprising:
a tubular body (81) which is fixed to an edge of the inner tank insertion hole (34) and into which the pipe (P) is loosely inserted;
a flange-shaped cover plate (83) located away from the tubular body (81) in the first inter-tank region (91) or the inner tank (3) and projecting from an outer wall of the pipe (P) in a radial direction; and
an expandable filter (82) which closes a gap between the tubular body (81) and the cover plate (83) such that gas is allowed to flow through the gap.

## Patentansprüche

1. Dreifachsicherheitsbehälter (1), umfassend:
einen Außenbehälter (5);
einen Zwischenbehälter (4), der sich in dem Außenbehälter (5) befindet;
einen Innenbehälter (3), der sich in dem Zwischenbehälter (4) befindet, und ein verflüssigtes Gas darin speichert; und
ein Rohr (P), das den Außenbehälter (5), den Zwischenbehälter (4) und den Innenbehälter (3) durchdringt, wobei
das Rohr (P) an den Außenbehälter (5) durch ein erstes expandierbares Rohr (61) gekoppelt ist, **dadurch gekennzeichnet, dass** das Rohr (P) an einen von dem Innenbehälter (3) und dem Zwischenbehälter (4) durch ein zweites expandierbares Rohr (62 oder 68) gekoppelt ist und mit dem anderen von dem Innenbehälter (3) und dem Zwischenbehälter (4) verbunden ist.

2. Dreifachsicherheitsbehälter (1) nach Anspruch 1, wobei:
der Zwischenbehälter (4) ein Einführloch (44), in das das Rohr (P) eingeführt ist, einschließt;
ein Basisabschnitt des zweiten expandierbaren Rohrs (62) mit dem Zwischenbehälter (4) verbunden ist, um von einem Rand des Einführlochs (44) nach außen vorzustehen; und
ein Spitzenabschnitt des zweiten expandierbaren Rohrs (62) mit dem Rohr (P) verbunden ist.

3. Dreifachsicherheitsbehälter (1) nach Anspruch 2, wobei:
eine pulverförmige Isolierung in einen Behälterzwischenbereich (92) zwischen dem Zwischenbehälter (4) und dem Außenbehälter (5) eingefüllt ist; und
ein Pulverleckschutzwall (67), der verhindert, dass sich die pulverförmige Isolierung in einen Bereich um das zweite expandierbare Rohr (62) herum bewegt, sich um das zweite expandierbare Rohr (62) herum befindet.

4. Dreifachsicherheitsbehälter (1) nach Anspruch 3, wobei
eine Faserisolierung (72) in einen Spalt zwischen dem Pulverleckschutzwall (67) und dem Rohr (P) in einer radialen Richtung des Rohrs (P) eingefüllt ist.

5. Dreifachsicherheitsbehälter (1) nach Anspruch 3 oder 4, wobei:
der Pulverleckschutzwall (67) ein rohrförmiges Element ist, das das zweite expandierbare Rohr (62) umgibt; und
ein erster Endabschnitt des rohrförmigen Elements und der Zwischenbehälter (4) miteinander verbunden sind, oder ein zweiter Endabschnitt des rohrförmigen Elements und das Rohr (P) miteinander verbunden sind.

6. Dreifachsicherheitsbehälter (1) nach Anspruch 1, wobei:
der Zwischenbehälter (4) ein Einführloch (44), in das das Rohr (P) eingeführt ist, einschließt;
ein Basisabschnitt des zweiten expandierbaren Rohrs (62) mit dem Zwischenbehälter (4) verbunden ist, um von einem Rand des Einführlochs (44) nach innen vorzustehen; und
ein Spitzenabschnitt des zweiten expandierbaren Rohrs (62) mit dem Rohr (P) verbunden ist.

7. Dreifachsicherheitsbehälter (1) nach Anspruch 6, wobei:
eine pulverförmige Isolierung in einen Behälterzwischenbereich (91) zwischen dem Innenbehälter (3) und dem Zwischenbehälter (4) eingefüllt ist; und
ein Pulverleckschutzwall (67), der verhindert, dass sich die pulverförmige Isolierung in einen Bereich um das zweite expandierbare Rohr (62) herum bewegt, sich um das zweite expandierbare Rohr (62) herum befindet.

8. Dreifachsicherheitsbehälter (1) nach Anspruch 7, wobei eine Faserisolierung (72) in einen Spalt zwischen dem Pulverleckschutzwall (67) und dem Rohr (P) in einer radialen Richtung des Rohrs (P) eingefüllt ist.

9. Dreifachsicherheitsbehälter (1) nach Anspruch 7 oder 8, wobei:
der Pulverleckschutzwall (67) ein rohrförmiges Element ist, das das zweite expandierbare Rohr (62) umgibt; und
ein erster Endabschnitt des rohrförmigen Elements und der Zwischenbehälter (4) miteinander verbunden sind, oder ein zweiter Endabschnitt des rohrförmigen Elements und das Rohr (P) miteinander verbunden sind.

10. Dreifachsicherheitsbehälter (1) nach Anspruch 1, wobei:
der Innenbehälter (3) ein Einführloch (34), in das das Rohr (P) eingeführt ist, einschließt;
ein Basisabschnitt des zweiten expandierbaren Rohrs (68) mit dem Innenbehälter (3) verbunden ist, um von einem Rand des Einführlochs (34) nach innen vorzustehen; und
ein Spitzenabschnitt des zweiten expandierbaren Rohrs (68) mit dem Rohr (P) verbunden ist.

11. Dreifachsicherheitsbehälter (1), umfassend:
einen Außenbehälter (5);
einen Zwischenbehälter (4), der sich in dem Außenbehälter (5) befindet;
einen Innenbehälter (3), der sich in dem Zwischenbehälter (4) befindet, ein Innenbehältereinführloch (34) einschließt und ein verflüssigtes Gas darin speichert; und
ein Rohr (P), das den Außenbehälter (5), den Zwischenbehälter (4) und den Innenbehälter (3) durchdringt, wobei:
das Rohr (P) und der Außenbehälter (5) durch ein erstes expandierbares Rohr (61) aneinander gekoppelt sind; und
das Rohr (P) und der Zwischenbehälter (4) miteinander verbunden sind;
**dadurch gekennzeichnet, dass**:
das Rohr (P) in das Innenbehältereinführloch (34) lose eingesetzt ist; und
ein Innenraum des Innenbehälters (3) und ein Zwischenbehälterbereich (91) zwischen dem Innenbehälter (3) und dem Zwischenbehälter (4) durch einen Spalt zwischen dem Innenbehältereinführloch (34) und dem Rohr (P) miteinander in Verbindung stehen.

12. Dreifachsicherheitsbehälter (1) nach Anspruch 11, ferner umfassend:
ein rohrförmiger Körper (81), der an einem Rand des Innenbehältereinführlochs (34) befestigt ist und in den das Rohr (P) lose eingeführt ist;
eine flanschförmige Abdeckplatte (83), die sich entfernt von dem Rohrkörper (81) in dem ersten Behälterzwischenbereich (91) oder dem Innenbehälter (3) befindet und von einer Außenwand des Rohrs (P) in einer radialen Richtung vorsteht; und
ein expandierbarer Filter (82), der einen Spalt zwischen dem rohrförmigen Körper (81) und der Abdeckplatte (83) derart schließt, um zu ermöglichen, dass Gas durch den Spalt strömt.

## Revendications

1. Réservoir de triple confinement (1) comprenant :
un réservoir extérieur (5) ;
un réservoir intermédiaire (4) situé dans le réservoir extérieur (5) ;
un réservoir intérieur (3) situé dans le réservoir intermédiaire (4) et stockant un gaz liquéfié en son sein ; et
un tuyau (P) pénétrant dans le réservoir extérieur (5), le réservoir intermédiaire (4), et le réservoir intérieur (3), dans lequel
le tuyau (P) est accouplé au réservoir extérieur (5) au moyen d'un premier tuyau expansible (61), **caractérisé en ce que** le tuyau (P) est accouplé à l'un parmi le réservoir intérieur (3) et le réservoir intermédiaire (4) au moyen d'un second tuyau expansible (62 ou 68), et est relié à l'autre parmi le réservoir intérieur (3) et le réservoir intermédiaire (4).

2. Réservoir de triple confinement (1) selon la revendication 1, dans lequel :
le réservoir intermédiaire (4) comporte un trou d'insertion (44) dans lequel le tuyau (P) est inséré ;
une partie de base du second tuyau expansible (62) est reliée au réservoir intermédiaire (4) de manière à faire saillie vers l'extérieur depuis un bord du trou d'insertion (44) ; et
une partie de bout du second tuyau expansible (62) est reliée au tuyau (P).

3. Réservoir de triple confinement (1) selon la revendication 2, dans lequel :
un isolant en poudre est introduit dans une région inter-réservoirs (92) entre le réservoir intermédiaire (4) et le réservoir extérieur (5) ; et
une digue de prévention de fuite de poudre (67) qui empêche l'isolant en poudre de se déplacer vers une région autour du second tuyau expansible (62) est située autour du second tuyau expansible (62).

4. Réservoir de triple confinement (1) selon la revendication 3, dans lequel :
un isolant fibreux (72) est introduit dans un espace entre la digue de prévention de fuite de poudre (67) et le tuyau (P) dans une direction radiale du tuyau (P).

5. Réservoir de triple confinement (1) selon la revendication 3 ou 4, dans lequel :
la digue de prévention de fuite de poudre (67) est un élément tubulaire entourant le second tuyau expansible (62) ; et
une première partie d'extrémité de l'élément tubulaire et le réservoir intermédiaire (4) sont reliés l'un à l'autre, ou une seconde partie d'extrémité de l'élément tubulaire et le tuyau (P) sont reliés l'un à l'autre.

6. Réservoir de triple confinement (1) selon la revendication 1, dans lequel :
le réservoir intermédiaire (4) comporte un trou d'insertion (44) dans lequel le tuyau (P) est inséré ;
une partie de base du second tuyau expansible (62) est reliée au réservoir intermédiaire (4) de manière à faire saillie vers l'intérieur depuis un bord du trou d'insertion (44) ; et
une partie de bout du second tuyau expansible (62) est reliée au tuyau (P).

7. Réservoir de triple confinement (1) selon la revendication 6, dans lequel :
un isolant en poudre est introduit dans une région inter-réservoirs (91) entre le réservoir intérieur (3) et le réservoir intermédiaire (4) ; et
une digue de prévention de fuite de poudre (67) qui empêche l'isolant en poudre de se déplacer vers une région autour du second tuyau expansible (62) est située autour du second tuyau expansible (62).

8. Réservoir de triple confinement (1) selon la revendication 7, dans lequel un isolant fibreux (72) est introduit dans un espace entre la digue de prévention de fuite de poudre (67) et le tuyau (P) dans une direction radiale du tuyau (P).

9. Réservoir de triple confinement (1) selon la revendication 7 ou 8, dans lequel :
la digue de prévention de fuite de poudre (67) est un élément tubulaire entourant le second tuyau expansible (62) ; et
une première partie d'extrémité de l'élément tubulaire et le réservoir intermédiaire (4) sont reliés l'un à l'autre, ou une seconde partie d'extrémité de l'élément tubulaire et le tuyau (P) sont reliés l'un à l'autre.

10. Réservoir de triple confinement (1) selon la revendication 1, dans lequel :
le réservoir intérieur (3) comporte un trou d'insertion (34) dans lequel le tuyau (P) est inséré ;
une partie de base du second tuyau expansible (68) est reliée au réservoir intérieur (3) de manière à faire saillie vers l'intérieur depuis un bord du trou d'insertion (34) ; et
une partie de bout du second tuyau expansible (68) est reliée au tuyau (P).

11. Réservoir de triple confinement (1) comprenant :
un réservoir extérieur (5) ;
un réservoir intermédiaire (4) situé dans le réservoir extérieur (5) ;
un réservoir intérieur (3) qui est situé dans le réservoir intermédiaire (4), comporte un trou d'insertion de réservoir intérieur (34), et stocke un gaz liquéfié en son sein ; et
un tuyau (P) pénétrant dans le réservoir extérieur (5), le réservoir intermédiaire (4), et le réservoir intérieur (3), dans lequel :
le tuyau (P) et le réservoir extérieur (5) sont accouplés l'un à l'autre au moyen d'un premier tuyau expansible (61) ; et
le tuyau (P) et le réservoir intermédiaire (4) sont reliés l'un à l'autre ;
**caractérisé en ce que** :
le tuyau (P) est inséré de manière lâche dans le trou d'insertion de réservoir intérieur (34) ; et
un intérieur du réservoir intérieur (3) et une région inter-réservoirs (91) entre le réservoir intérieur (3) et le réservoir intermédiaire (4) communiquent entre eux au moyen d'un espace entre le trou d'insertion de réservoir intérieur (34) et le tuyau (P).

12. Réservoir de triple confinement (1) selon la revendication 11, comprenant en outre :
un corps tubulaire (81) qui est fixé à un bord du trou d'insertion de réservoir intérieur (34) et dans lequel le tuyau (P) est inséré de manière lâche ;
une plaque de recouvrement en forme de bride (83) située à distance du corps tubulaire (81) dans la première région inter-réservoirs (91) ou le réservoir intérieur (3) et faisant saillie depuis une paroi extérieure du tuyau (P) dans une direction radiale ; et
un filtre expansible (82) qui ferme un espace entre le corps tubulaire (81) et la plaque de recouvrement (83) de sorte que le gaz puisse circuler à travers l'espace.
